# EUROPÄISCHE PATENTSCHRIFT

(11) **EP 1 249 292 B1**
(45) Veröffentlichungstag und Bekanntmachung des Hinweises auf die Patenterteilung: **02.08.2006**
(21) Anmeldenummer: 02008428.1
(22) Anmeldetag: 12.04.2002
(51) Int. Cl.: B23C 3/12, B23D 79/02

(54) **Vorrichtung zum Bearbeiten von Kunststoffprofilen für Fensterrahmen oder dergleichen**
Device for the machining of plastique profiles for window frames or the like
Dispositif pour l'usinage de profilés en plastique pour cadres de fenêtres ou similaires

(30) Priorität: 12.04.2001 DE 20106579 U; 09.06.2001 DE 20109451 U
(43) Veröffentlichungstag der Anmeldung: 16.10.2002
(73) Patentinhaber: Urban GmbH & Co. Maschinenbau KG, D-87700 Memmingen (DE)
(72) Erfinder: Hiebeler, Stefan, 87463 Reicholzried (DE)
(74) Vertreter: Pfister, Stefan Helmut Ulrich

(56) Entgegenhaltungen:
- EP-A- 0 429 417
- EP-A- 0 460 654
- DE-A- 4 018 145
- DE-A- 4 219 088
- DE-A- 4 220 944
- DE-U- 9 405 082
- GB-A- 690 586

## Beschreibung

Die Erfindung betrifft eine Bearbeitungsvorrichtung für Kunststoffprofile gemäß dem Oberbegriff des Anspruchs 1. Eine solche Bearbeitungsvorrichtung ist aus EP-A-0 460 654 bekannt.

Wenn nachfolgend von Fensterrahmen gesprochen wird, so sind hierunter auch Teile solcher Rahmen, sowie auch Rahmen und Teile davon für andere Verwendungszwecke, beispielsweise Türrahmen oder dergleichen, zu verstehen.

Aus EP-A-0 460 654 ist eine Vorrichtung zum Bearbeiten von Fensterrahmen bekannt. Die dort beschriebene Vorrichtung weist eine Fixiereinrichtung für aus Profilstücken geschweißte Rahmen, insbesondere Fensterrahmen, auf, die über mehrere in der Rahmenebene oder senkrecht hierzu verfahrbare Bearbeitungseinheiten bearbeitbar sind. Bei dieser Vorrichtung wird also ein einzelnes Werkstück in der Fixiereinrichtung gehalten und zeitgleich oder hintereinander über mehrere Bearbeitungseinheiten bearbeitet. Obwohl diese Vorrichtung in der Lage ist, mehrere Werkzeuge auf ein in der Fixiereinrichtung eingespanntes Werkstück einwirken zu lassen, weist sie den Nachteil auf, daß alle Werkzeuge nur das eine, in der Fixiereinrichtung gehaltene Werkstück bearbeiten können.

Der besondere Nachteil der bekannten Vorrichtung liegt dabei darin, daß nicht benötigte Werkzeuge ruhen müssen, während andere Werkzeuge die Bearbeitung vornehmen. Dies führt entweder zu vergleichsweise langen Bearbeitungszeiten oder zu hohen Kosten, da andere, zum eingespannten Werkstück zugehörige weitere Werkstücke möglicherweise mit gerade diesen ruhenden Werkzeugen bearbeitet werden könnten. Dies kann bei der bekannten Vorrichtung nun dadurch geschehen, daß entweder diese zugehörigen weiteren Werkstücke nacheinander in die Fixereinrichtung eingespannt werden und sequentiell bearbeitet werden, oder daß weitere Vorrichtungen zur Verfügung gestellt werden, die die weitere Bearbeitung anderer Werkstücke übernehmen.

Aus der DE 40 18 145 A ist eine Verputzvorrichtung für aus Kunststoffprofilen geschweißte Rahmen bekannt. Diese Vorrichtung weist einen Werkzeugträger mit einem oder mehreren Fräswerkzeugen auf, die senkrecht zur Rahmenebene oder auch in der Rahmenebene einen Fensterrahmen bearbeiten können. Auch diese Vorrichtung geht davon aus, daß ein einzelner Fensterrahmen in der Fixiereinrichtung gehalten ist, somit Werkzeuge nur sequentiell hintereinander zum Einsatz kommen können. Wie auch bereits bei der oben beschriebenen Bearbeitungsvorrichtung sind damit auch hier die Bearbeitungszeiten oder die Rüstzeiten erhöht, so daß eine vergleichsweise lange Zeit benötigt wird um alle Arbeiten an einem aus mehreren Teilen bestehenden Satz von Werkstücken vornehmen zu können.

Aufgabe der Erfindung ist es daher, eine Überarbeitungsvorrichtung zu schaffen, die durch Verkürzung der Rüst- und Bearbeitungszeiten im Falle mehrerer zu bearbeitender Werkstücke flexibel und Kostengünstig einsetzbar ist.

Diese Aufgabe wird gelöst durch eine Vorrichtung gemäß Ansprusch 1, wie eingangs beschrieben, wobei vorgeschlagen wird, daß eine zweite Fixiereinrichtung für ein Kunststoffteil, insbesondere ein Kunststoffprofilteil, ein Kunststoffprofilelement oder einen Kunststoffrahmen vorgesehen ist und die weitere Bearbeitungseinheit sowohl den in der ersten Fixiereinrichtung fixierten Fensterrahmen beziehungsweise einen Teil davon als auch das in der zweiten Fixiereinrichtung fixierte Kunststoffteil zu bearbeiten vermag. Vorteilhafte Ausführungen der erfindungsgemäßen Vorrichtung sind in den Unteransprüchen bescrieben.

Die erfindungsgemäße Lösung zielt darauf ab, an einer Maschine beziehungsweise Vorrichtung zwei unterschiedliche Bearbeitungen ausführen zu können. Für das Aufspannen des jeweiligen Werkstückes, einerseits eines Fensterrahmens (wie eingangs definiert) und andererseits eines Kunststoffteiles (wie nachfolgend noch definiert wird) auf einem Maschinengestell, werden zwei Funktionalitäten an einer Vorrichtung integriert, wodurch eine rationell einsetzbare und günstig zu produzierende Vorrichtung entsteht. Dabei sind unterschiedliche Bearbeitungswerkzeuge vorgesehen, es können aber auch gleiche Bearbeitungswerkzeuge in den beiden Bearbeitungsstationen angeordnet sein. Bevorzugt wird einerseits eine Verputzvorrichtung als Bearbeitungswerkzeug eingesetzt, die dazu dient, die beim Verschweißen von Kunststoffrahmen entstehenden Kunststoffschweißwülste im Fügebereich des Rahmenecks zu entfernen. Des Weiteren ist eine Bearbeitungseinheit vorgesehen, die auch dazu dient, das in einer zweiten Fixiereinrichtung gehaltene Kunststoffteil zu bearbeiten.

Als Kunststoffteil ist hierbei zum Beispiel ein Kunststoffprofilteil, ein Kunststoffprofilelement oder auch ein Kunststoffrahmen oder auch ein Teilrahmen zu verstehen. Die Erfindung zielt darauf ab, mehrere, für die Herstellung eines Fensterrahmens notwendigen Bearbeitungsschritte in einer günstig herzustellenden Vorrichtung zu kombinieren, um mit wenigen Maschinen einen entsprechenden Fensterrahmen zu erstellen

Eine vorteilhafte Weiterbildung der Erfindung sieht vor, daß die weitere Bearbeitsungseinheit zum Bearbeiten insbesondere der Enden des in der zweiten Fixiereinrichtung gehaltenen Kunststoffteils vorgesehen ist.

Insbesondere ist diese Vorrichtung günstig, wenn Fenster mit Kämpfer (Quersprossen und so weiter) realisiert werden sollen, da der Aufwand für die Anpassung des Kämpfers verhältnismäßig hoch ist und dies durch die erfindungsgemäße Vorrichtung in einfacher Weise erreicht werden kann.

Bevorzugt wird die Vorrichtung mit einer Fräseinrichtung als Bearbeitungseinheit ausgestattet werden, da dies die hauptsächlichste Bearbeitung in diesem Bereich ist. Gleichwohl ist die Erfindung aber auf den Einsatz einer Fräseinrichtung nicht beschränkt. Auch wenn nachfolgend oftmals beispielhaft von einer Fräseinrichtung gesprochen wird, so ist hier in gleicher Weise auch auf die Möglichkeiten einer Bearbeitungseinheit für andere Bearbeitungsschritte (zum Beispiel eine Bohrmaschine, eine Säge oder andere, spanabhebende Bearbeitungen oder Schweißen beziehungsweise verformende Bearbeitungen) zu denken.

Die Vorrichtung zum Verputzen der Schweißraupen umfaßt dabei beispielsweise Abstechmesser zum Abstechen der Schweißraupe auf der Vorder- und Rückseite des Rahmens. Das Bearbeiten der Schweißraupe auf der Außenseite der Ecke kann durch die Fräseinrichtung beziehungsweise Bearbeitungseinheit erfolgen. Es ist ein besonderer Vorzug der Erfindung, daß die Bearbeitungseinheit sowohl für die Kunststoffteile, welche in der zweiten Fixiereinrichtung gehalten sind, aber auch für die Fensterrahmen, die in der ersten Fixiereinrichtung gehalten sind, einsetzbar ist. Hieraus resultiert eine hohe Effizienz dieser doch günstig herzustellenden Vorrichtung, da verschiedene Bearbeitungen, insbesondere an dem in der ersten Fixiereinrichtung gehaltenen Fensterrahmen möglich ist. Es ist daher möglich, eine Vielzahl der nötigen Verputzarbeiten an dem verschweißten Fensterrahmen vorzunehmen, zum einen werden die an den Stirnflächen vorstehenden Schweißraupen durch die Messer abgestochen, zum anderen wird im Randbereich ein entsprechender profilierter Fräser eingesetzt.

Es ist von Vorteil, daß im Bereich der Bearbeitungseinheit mindestens ein Spalt an der Vorrichtung angeordnet ist, in den ein Fensterrahmen, ein Kunststoffteil oder ein sonstiges Teil einschiebbar ist. Der Spalt weist dabei günstigerweise nur gerade eine solche Abmessung auf, daß das zu bearbeitende Element einführbar ist, um sicherzustellen, daß nicht auch eine Bedienperson in die Vorrichtung greift und sich verletzt. Günstigerweise werden mehrere Spalte oder Öffnungen vorgesehen, da auch mehrere Fixiereinrichtungen angeordnet sind. Insbesondere wenn die Bearbeitungseinheit verschiebbar angeordnet ist, können entlang des Verschiebeweges der Bearbeitungseinheit mehrere Spalte beziehungsweise Öffnungen vorgesehen sein.

In vielen Fällen ist es dabei möglich, daß die Fräseinrichtung, die die Enden der Kunststoffprofilteile bearbeitet, auch die Schweißraupe bearbeitet. Andererseits ist es leicht möglich, das Fräswerkzeug auszutauschen. Für einen einfachen Austausch des Fräswerkzeuges von seiner Welle ist es möglich, daß eine Schnellwechselvorrichtung vorgesehen ist.

Gemäß einer Weiterbildung der erfindungsgemäßen Lösung ist es vorgesehen, daß Messer vorhanden sind, die derart angeordnet sind, daß ein Abstechen der Schweißraupen auf der Ober- und Unterseite der Fensterrahmen in einem Arbeitsgang ermöglicht ist.

Ein weiterer Aspekt der erfindungsgemäßen Lösung ist dadurch gekennzeichnet, daß am Maschinengestell eine verschwenkbare Anschlagleiste mit zugehörigen Einrichtungen angeordnet ist oder zusammenwirkt, an denen ein Kunststoffprofilteil fixierbar ist. Dabei ist insbesondere vorgesehen, daß die Anschlagleiste winkelverschwenkbar ist, das bedeutet, ein gewünschter Winkel einstellbar ist und die Anschlagleiste bezüglich dieses Winkels auch festlegbar ist, um ein Kunststoffteil beziehungsweise ein Kunststoffprofilteil in entsprechender Winkellage zu bearbeiten. Hierzu wird das zu bearbeitende Kunststoffteil an der zweiten Fixiereinrichtung fixiert und dann in der gewünschten Winkellage bearbeitet. Dies kann insbesondere bei komplizierten Kämpferausschnitten von Vorteil sein.

In einer Weiterbildung der erfindungsgemäßen Lösung ist es vorgesehen, daß ein Motor vorhanden ist, der eine Spindel trägt und auf der ein Fräswerkzeug lösbar/fest angeordnet ist.

In einer bevorzugten Ausgestaltung der Erfindung ist vorgesehen, daß eine Vorschubeinrichtung für die Bearbeitungseinheit vorgesehen ist. Durch diese Vorschubeinrichtung, die entweder händisch oder motorisch unterstützt, zum Beispiel durch einen Pneumatikzylinder oder einen Elektromotor ausgeführt ist, wird vorgesehen, daß die Bearbeitungseinheit auf einem Schlitten gelagert auf einer Führungsbahn verschieblich ist. Dadurch ist es möglich, die Bearbeitungseinheit beziehungsweise die Fräsvorrichtung in eine Wechselposition zurückzufahren und dort zum Beispiel einen Werkzeugwechsel durchzuführen und dann die Bearbeitungseinheit wieder in Bearbeitungsposition zu bringen. Ein durch den Antrieb unterstützter Vorschub ist dabei natürlich komfortabler und auch sicherer. Günstigerweise wird dabei vorgesehen, daß die Bearbeitungseinheit von der zurückgezogenen Position in eine Bearbeitungsposition des Kunststoffteiles an der zweiten Fixiereinrichtung und/oder an eine Bearbeitungsposition des von der ersten Fixiereinrichtung gehaltenen Rahmens geführt ist. Dadurch wird erreicht, daß die Bearbeitungseinheit in all den Bereichen zur Verfügung steht, in welchen eine entsprechende Bearbeitung gewünscht ist. Günstig ist dabei, daß dies sehr einfach realisierbar ist und dadurch eine Bearbeitungseinheit in verschiedenen Funktionalitäten (zum Beispiel Eckbearbeitung des Rahmens oder Endbearbeitung eines Profilteiles) einsetzbar ist.

Selbstverständlich ist es dabei auch möglich, daß das Kunststoffprofilteil ein Kämpfer ist.

Eine Weiterbildung der erfindungsgemäßen Lösung ist dadurch gekennzeichnet, daß die Vorschubeinrichtung derart ausgeführt ist, daß das Fräswerkzeug in eine Stellung verfahrbar ist, in der die Außenkanten des Rahmens bearbeitbar sind.

Es ist günstig, daß im Bereich der Fixiereinrichtung ein Anschlag vorgesehen ist, der zur Begrenzung des Einführens des Profilteiles beziehungsweise des Fensterrahmens dient. Durch einen solchen Anschlag ist es einfach möglich, das zu bearbeitende Werkstück in seiner Lage zu definieren, um unnötigen Verschnitt oder Ausschuß zu vermeiden.

Besonders von Vorteil ist, wenn ein Anschlag an der verschiebbar ausgestalteten Bearbeitungseinheit vorgesehen ist und dieser Anschlag sich mit der Bearbeitungseinheit mitbewegt. Der Anschlag dient zur Begrenzung des Einführens des Profilteiles in dem Bearbeitungsbereich der Bearbeitungseinheit. Es ist natürlich zu vermeiden, daß dieser Anschlag mit dem Bearbeitungswerkzeug, zum Beispiel einem entsprechenden, aufwendigen Fräskopf kollidiert. Da die Bearbeitungseinheit ein Auswechseln des Werkzeuges zuläßt, ist es natürlich möglich, auch Werkzeuge mit unterschiedlichen Durchmessern einzubauen, weswegen eine feststehende Lage eines Anschlages unter Umständen hier zu Kollisionen führen kann. Bewegt sich aber die Bearbeitungseinheit, wie in einer Variante der Erfindung vorgeschlagen, so besteht die Gefahr eine Kollision. In diesem Fall ist es günstig, wenn auf dem Schlitten, welcher die Bearbeitungseinheit beweglich lagert, auch der Anschlag vorgesehen ist und somit dynamisch automatisch mitbewegt wird. Der Arbeitsablauf ist dann der, daß zuerst die verschiebbar gelagerte Bearbeitungseinheit zurückgezogen ist, das Kunststoffteil an der Anschlagleiste eingelegt und gegen den Anschlag geführt wird, dann mit der (zweiten) Fixiereinrichtung festgelegt wird und hernach die Vorschubbewegung der Vorschubvorrichtung dazu dient, daß das Bearbeitungswerkzeug der Bearbeitungseinheit die entspechende Bearbeitung an dem Kunststoffteil ausführt. Durch diese Ausgestaltung wird eine hohe Bearbeitungsqualität bei denkbar geringen Aufwand erreicht.

In der Zeichnung ist ein Ausführungsbeispiel der Erfindung schematisch dargestellt. Es zeigen:
- Fig. 1: eine Seitenansicht, teilweise im Schnitt der erfindungsgemäßen Vorrichtung und
- Fig. 2: eine Draufsicht auf die wesentlichen Teile der Vorrichtung nach der Fig. 1.

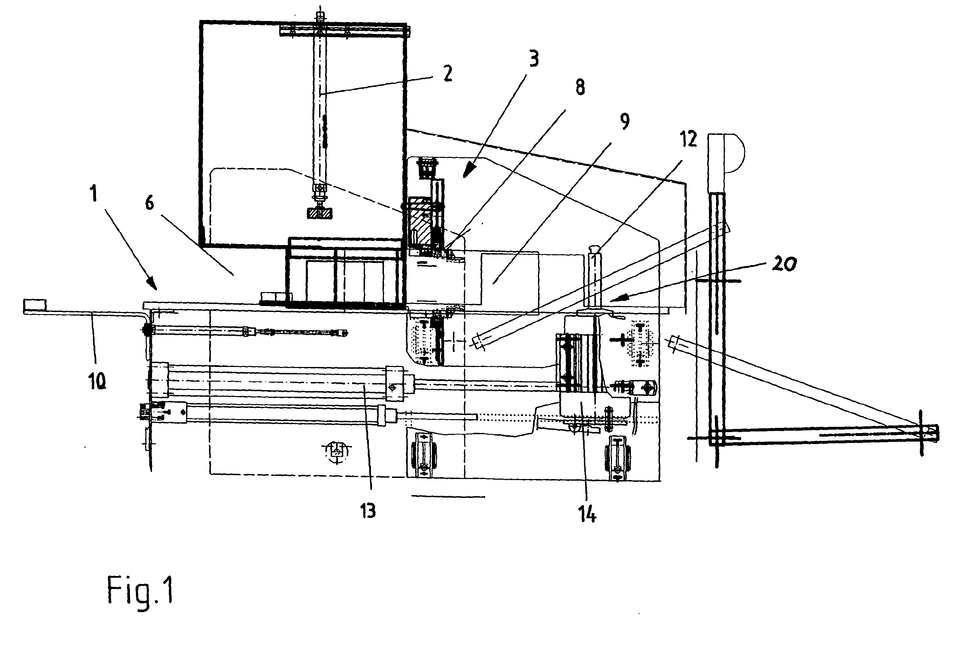

Das Maschinengestell 1 trägt eine erste Fixiereinrichtung 2 und in den Spalt 6 kann ein Fensterrahmen 7 (in Fig. 1 nicht gezeigt) eingeschoben werden. Mittels der Messer 8 und 9 ist es möglich, insbesondere im gleichen Arbeitsgang, die Schweißraupen auf der Ober- und Unterseite der Fensterrahmen 7 abzustechen. Die Elemente 8 und 9 bilden zusammen im Wesentlichen die Verputzvorrichtung 3. Im Bereich vor dem Spalt 6 befindet sich noch ein Tisch 10, der zur Auflage für den Fensterrahmen 7 dient. Im hinteren, in Fig. 1 rechten Teil der Zeichnung, befindet sich die Bearbeitungseinheit 20, die hier als Fräseinheit ausgebildet ist. Hierzu weist diese einen Antriebsmotor 14 auf, der ein (hier nicht gezeigtes ) Werkzeug, welches auf der Spindel 12 fixierbar ist, antreibt.

Günstig ist es dabei, daß die Bearbeitungseinheit 20 längsbeweglich in der Vorrichtung angeordnet ist. Hierzu dient die Vorschubeinrichtung 13, die von einem Pneumatikzylinder gebildet ist, dessen Kolbenstange an dem Motor 14 der Bearbeitungseinheit 20 angreift. Zur weiteren Unterstützung der Bearbeitungseinheit 20, die schlittenartig gelagert ist, sind entsprechende Schienenführungen oder dergleichen vorgesehen.

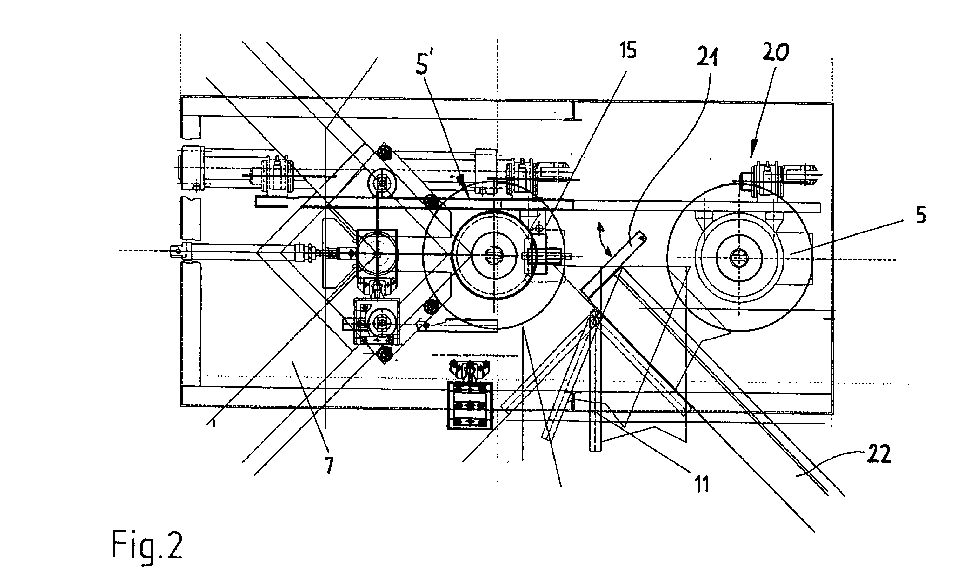

In Fig. 2 ist zum einen im linken Bereich gezeigt, wie der Fräser 5' der Bearbeitungseinheit 20 den Eckbereich des Fensterrahmens 7 bearbeitet. In Fig. 2 ist noch eine zweite Stellung des Fräsers (mit dem Bezugszeichen 5) angedeutet, dies ist die ganz zurückgezogene Position der Bearbeitungseinheit 20, um zum Beispiel ein weiteres Profilteil 22 einzuführen. Dieses Profilteil 22 liegt dabei an der Anschlagleiste 11 an. Die Anschlagleiste 11 ist zum Beispiel mit einer Winkellehre ausgestattet und drehbar gelagert, wodurch es möglich ist, verschiedene Stellungen der Anschlagleiste 11 (wie angedeutet) relativ zu der Bewegungsbahn der Bearbeitungseinheit 20 beziehungsweise dem Fräser 5 zu realisieren. Dies ist insbesondere bei winkligen, komplizierten Anordnungen von Kämpfer oder sonstigen Querstreben im Fensterrahmenbau von Vorteil. Damit das eingeführte Profilteil 22 nicht ungewollt mit dem Bearbeitungswerkzeug 5 kollidiert, ist die Bearbeitungseinheit 20 ganz zurückgeschoben.

Um den Einschubweg des Profilteiles 22 in die Vorrichtung zu begrenzen, ist ein Anschlag 21 vorgesehen. Dieser ist so ausgestaltet, daß er wegschwenk- oder wegklappbar ist, um die Bewegungsbahn des Bearbeitungswerkzeuges 5 nicht zu behindern. Dabei ist es möglich diesen Anschlag 21 entweder im Maschinengestell feststehend auszubilden oder aber an der Schlittenführung des Bearbeitungswerkzeuges 5 mitbewegend auszubilden, um in einfacher Weise eine Kollisionsgefahr zu bannen. Die zweite Fixiereinrichtung ist zum Beispiel im Bereich der Anschlagleiste (hier nicht dargestellt) angeordnet und spannt das Profilteil 22 während der Bearbeitung.

Auf der anderen Seite des Maschinengestells 1, das beispielsweise noch einen Tisch 10 aufweisen kann, ist ein verschwenkbarer Anschlag 11 mit den zugehörigen Einrichtungen vorgesehen, an denen ein nicht näher dargestelltes Kunststoffprofilteil fixiert werden kann.

Der Motor 14 treibt ein Fräswerkzeug 5 an, das auf der Spindel 12 fixierbar ist. Durch die Vorschubeinrichtung 13 kann das Fräswerkzeug gegen das an der Anschlagleiste 11 anliegende Kunststoffprofilteil geführt werden, um die Enden dieses Kunststoffprofilteiles zu bearbeiten. Dieses Kunststoffprofilteil kann beispielsweise ein Kämpfer sein, der in den Fensterrahmen einzusetzen ist. Das Fräswerkzeug kann aber auch in die Stellung 15 gefahren werden, die in der Fig. 2 gezeigt ist, um auf diese Weise die Außenkante des Rahmens 7 zu bearbeiten. Für ein schnelles Austauschen des Bearbeitungswerkzeuges 5 auf der Welle 12 ist ein entsprechender Schnellverschluß an der Welle vorgesehen. Mit Hilfe der zweiten Fixiereinrichtung ist es möglich, beliebig ausgestaltete Kunststoffteile, Profilteile, Kunststoffprofilteile, Rahmenelemente, Kunststoffrahmenteile zu bearbeiten, wenngleich insbesondere die Endbearbeitung eines Kunststoffprofilteiles, insbesondere zur Anpassung an die Kontur bei Einbau eines Kämpfers und so weiter, von Interesse ist. Auf diesen speziellen Einsatzbereich ist die Erfindung aber in keinster Weise beschränkt.

Das Maschinengestell 1 ist in dem hier gezeigten Ausführungsbeispiel einstückig oder einteilig ausgebildet. Natürlich gehört zum Wesen der Erfindung auch eine Ausbildung des Maschinengestells aus mehreren, gegebenenfalls unabhängigen miteinander verbundenen Maschinengestellteilen.

## Patentansprüche

1. Bearbeitungsvorrichtung für Kunststoffprofile, insbesondere für Kunststoffprofile von Fensterrahmen oder dergleichen, mit einem Maschinengestell (1), einer ersten Fixiereinrichtung (2), über die ein Fensterrahmen oder ein Teil eines Fensterrahmens an dem Maschinengestell (1) fixierbar ist, einer Vorrichtung (3) zum Verputzen der Schweißraupen an diesem Fensterrahmen und einer weiteren Bearbeitungseinheit (20), **dadurch gekennzeichnet, daß** eine zweite Fixiereinrichtung für ein Kunststoffteil, insbesondere Kunststoffprofilteil, Kunststoffprofilelement oder einen Kunststoffrahmen beziehungsweise -Teilrahmen vorgesehen ist und die weitere Bearbeitungseinheit (20) sowohl den in der ersten Fixiereinrichtung (2) fixierten Fensterrahmen (7) beziehungsweise ein Teil davon als auch das in der zweiten Fixiereinrichtung fixierte Kunststoffteil zu bearbeiten vermag.

2. Bearbeitungsvorrichtung für Kunststoffprofile nach Anspruch 1, **dadurch gekennzeichnet, daß** die weitere Bearbeitsungseinheit (20) zum Bearbeiten insbesondere der Enden des in der zweiten Fixiereinrichtung gehaltenen Kunststoffteils vorgesehen ist.

3. Bearbeitungsvorrichtung für Kunststoffprofile nach einem oder beiden der vorhergehenden Ansprüche, **dadurch gekennzeichnet, daß** die Bearbeitungseinheit derart ausgebildet ist, daß sie auch auf die Außenseite des Fensterrahmens einzuwirken vermag.

4. Bearbeitungsvorrichtung für Kunststoffprofile nach einem oder mehreren der vorstehenden Ansprüche, **dadurch gekennzeichnet, daß** die Bearbeitungseinheit eine Fräseinrichtung (5) ist.

5. Bearbeitungsvorrichtung für Kunststoffprofile nach einem oder mehreren der vorstehenden Ansprüche, **dadurch gekennzeichnet, daß** im Bereich der Bearbeitungseinheit (2) mindestens ein Spalt (6) an der Vorrichtung angeordnet ist, in den ein Fensterrahmen (7), ein Kunststoffteil oder ein Teil davon einschiebbar ist.

6. Bearbeitungsvorrichtung für Kunststoffprofile nach einem oder mehreren der vorhergehenden Ansprüche, **dadurch gekennzeichnet, daß** an der Verputzvorrichtung Messer (8, 9) vorhanden sind, die insbesondere derart angeordnet sind, daß ein Abstechen der Schweißraupen auf der Ober- und Unterseite der Fensterrahmen (7) in einem Arbeitsgang ermöglicht ist.

7. Bearbeitungsvorrichtung für Kunststoffprofile nach einem oder mehreren der vorhergehenden Ansprüche, **dadurch gekennzeichnet, daß** am Maschinengestell (1) eine winkelverschwenkbare, gegebenenfalls festlegbare Anschlagleiste (11) angeordnet ist, die insbesondere mit der oder für die zweite Fixiereinheit vorgesehen ist.

8. Bearbeitungsvorrichtung für Kunststoffprofile nach einem oder mehreren der vorhergehenden Ansprüche, **dadurch gekennzeichnet, daß** ein Motor (14) vorhanden ist, der eine Spindel (12) antreibt und auf der ein Fräswerkzeug (5) lösbar/fest angeordnet ist und/oder die Aufnahmevorrichtung für die Fräswerkzeuge derart gestaltet ist, daß ein einfaches und schnelles Austauschen des Fräswerkzeuges ermöglicht ist.

9. Bearbeitungsvorrichtung für Kunststoffprofile nach einem oder mehreren der vorhergehenden Ansprüche, **dadurch gekennzeichnet, daß** eine Vorschubeinrichtung (13) für die Bearbeitungseinheit vorgesehen ist, welche die Bearbeitungseinheit insbesondere von einer zurückgezogenen Position in eine Bearbeitungsposition des Kunststoffteiles an der zweiten Fixiereinrichtung und/ oder an eine Bearbeitungsposition des von der ersten Fixiereinrichtung gehaltenen Rahmens verfährt.

10. Bearbeitungsvorrichtung für Kunststoffprofile nach einem oder mehreren der vorhergehenden Ansprüche, **dadurch gekennzeichnet, daß** im Bereich der Fixiereinrichtung ein Anschlag (21) zur Begrenzung des Einführens des Profilteiles beziehungsweise des Fensterrahmens vorgesehen ist.

11. Bearbeitungsvorrichtung für Kunststoffprofile nach einem oder mehreren der vorhergehenden Ansprüche, **dadurch gekennzeichnet, daß** ein Anschlag (21) an der verschiebbar ausgestalteten Bearbeitungseinheit (20) vorgesehen ist und sich dieser Anschlag (21) mit der Bearbeitungseinheit mitbewegt und der Anschlag zur Begrenzung des Einführens des Profilteiles in dem Bearbeitungsbereich der Bearbeitungseinheit dient.

## Claims

1. Machining device for plastic profiles, in particular for plastic profiles of window frames or the like, with a machine frame (1), a first fixing device (2) through which a window frame or a part of a window frame can be fastened to the machine frame (1), a device (3) for trimming the welding beads on this window frame, and another machining unit (20), **characterised in that** a second fixing device for a plastic part, in particular plastic profile part, plastic profile element or a plastic frame, respectively part frame, is provided, and the other machining unit (20) is able to machine the window frame (7) fixed in the first fixing device (2), respectively a part of it, as well as the plastic part fixed in the second fixing device.

2. Machining device for plastic profiles according to claim 1, **characterised in that** the other machining unit (20) is provided for machining in particular the terminal sections of the plastic part held in the second fixing device.

3. Machining device for plastic profiles according to one or both of the preceding claims, **characterised in that** the machining unit is designed in such a way that it is able to act also on the exterior of the window frame.

4. Machining device for plastic profiles according to one or more of the preceding claims, **characterised in that** the machining unit is a milling fixture (5).

5. Machining device for plastic profiles according to one or more of the preceding claims, **characterised in that** in the region of the machining unit (2) at least one gap (6) is arranged at the device into which a window frame (7), a plastic part or part of it can be inserted.

6. Machining device for plastic profiles according to one or more of the preceding claims, **characterised in that** at the trimming device there are knives (8, 9) which are in particular arranged in such a way that on the top and bottom side of the window frames (7) the welding beads can be cut off in one working cycle.

7. Machining device for plastic profiles according to one or more of the preceding claims, **characterised in that** at the machine frame (1) a stop rail (11) which can be angle-turned, if necessary be fixed, is arranged which is provided in particular with or for the second fixing unit.

8. Machining device for plastic profiles according to one or more of the preceding claims, **characterised in that** there is a motor (14) which drives a spindle (12), and on which a milling tool (5) is arranged releasably/fixedly, and/or the receiving device for the milling tools is designed in such a way that it is possible to exchange the milling tool easily and fast.

9. Machining device for plastic profiles according to one or more of the preceding claims, **characterised in that** an advancing device (13) is provided for the machining unit which shifts the machining unit in particular from a pulled-back position into a machining position of the plastic part at the second fixing device and/or to a machining position of the frame held by the first fixing device.

10. Machining device for plastic profiles according to one or more of the preceding claims, **characterised in that** in the region of the fixing device a stopper (21) is provided for limiting the introduction of the profile part, respectively the window frame.

11. Machining device according to one or more of the preceding claims, **characterised in that** a stopper (21) is provided at the machining unit (20), which is designed in such a way that it can be shifted, and this stopper (21) moves together with the machining unit, and the stopper serves for limiting the introduction of the profile part in the machining region of the machining unit.

## Revendications

1. Dispositif d'usinage de profilés en matière plastique, en particulier de profilés pour des cadres de fenêtre ou des objets similaires, comportant un châssis de machine (1), un premier dispositif de fixation (2) permettant de fixer un cadre de fenêtre ou une partie de cadre de fenêtre sur le châssis de machine (1), un dispositif (3) de mon nettoyage des résidus de soudures de ce cadre et un autre dispositif d'usinage (20), **caractérisé en ce qu'**un deuxième dispositif de fixation pour un élément en plastique, en particulier un profilé en plastique, une partie d'un profilé en plastique, un cadre ou une partie d'un cadre et **en ce qu'**une deuxième unité d'usinage (20) est capable nous on d'usiner un cadre de fenêtre (7) ou une partie d'un cadre maintenu par le premier dispositif de fixation (2) que d'usiner l'élément en plastique maintenu par le deuxième dispositif de fixation.

2. Dispositif d'usinage de profilés en plastique selon la revendication 1, **caractérisé en ce que** la deuxième unité d'usinage (20) est, en particulier, prévue pour l'usinage des extrémités d'un deuxième élément en plastique maintenu par le deuxième dispositif de fixation.

3. Dispositif d'usinage de profilés en plastique selon une ou deux des revendications précédentes, **caractérisé en ce que** l'unité d'usinage possède une configuration lui permettant d'usiner également les faces extérieures du cadre de fenêtre.

4. Dispositif d'usinage de profilés en plastique selon une ou plusieurs des revendications précédentes, **caractérisé en ce que** l'unité d'usinage est une fraiseuse (5).

5. Dispositif d'usinage de profilés en plastique selon une ou plusieurs des revendications précédentes, **caractérisé en ce que** le dispositif (2) possède au moins une fente (6), située à proximité de l'unité d'usinage (2), dans laquelle peut être introduit un cadre de fenêtre (7), un élément en plastique ou une partie d'un cadre.

6. Dispositif d'usinage de profilés en plastique selon une ou plusieurs des revendications précédentes, **caractérisé en ce que** le dispositif de nettoyage comporte des couteaux (8, 9) placés de façon à ce qu'ils puissent découper les résidus de soudage sur les faces supérieure et inférieure du cadre de fenêtre (7) en une seule étape.

7. Dispositif d'usinage de profilés en plastique selon une ou plusieurs des revendications précédentes, **caractérisé en ce qu'**un châssis de machine (1) comporte une butée (11) en forme de languette, pouvant être pivotée selon un angle donné et, le cas échéant, être immobilisée dans cette position et qui est, en particulier, prévue pour la deuxième unité de fixation.

8. Dispositif d'usinage de profilés en plastique selon une ou plusieurs des revendications précédentes, **caractérisé en ce qu'**il existe un moteur (14) qui commande un arbre de rotation (12) comportant un outil (5) de fraiseuse fixe ou amovible et/ou **en ce que** la configuration du mandrin maintenant la fraise permet le changement simple et rapide de la fraise.

9. Dispositif d'usinage de profilés en plastique selon une ou plusieurs des revendications précédentes, **caractérisé en ce qu'**il existe un dispositif de déplacement (13) de l'unité d'usinage permettant en particulier de déplacer l'unité d'usinage d'une position en retrait vers une position d'usinage d'un profilé en plastique maintenu par le deuxième dispositif de fixation et/ou vers une position d'usinage d'un cadre maintenu par le premier dispositif de fixation.

10. Dispositif d'usinage de profilés en plastique selon une ou plusieurs des revendications précédentes, **caractérisé en ce qu'**une butée (21) existe à proximité du dispositif de fixation, limitant l'introduction du profilé ou du cadre de fenêtre.

11. Dispositif d'usinage de profilés en plastique selon une ou plusieurs des revendications précédentes, **caractérisé en ce qu'**une butée (21) est prévue au niveau de l'unité d'usinage mobile (20) et **en ce que** cette butée (21) se déplace avec l'unité d'usinage et **en ce que** la butée sert à limiter l'introduction du profilé dans la zone d'usinage de l'unité d'usinage.
